# EUROPÄISCHE PATENTSCHRIFT

(11) **EP 2 032 830 B1**
(45) Veröffentlichungstag und Bekanntmachung des Hinweises auf die Patenterteilung: **21.10.2009**
(21) Anmeldenummer: 07718515.5
(22) Anmeldetag: 22.06.2007
(51) Int. Cl.: F02K 1/72, F02K 1/80

(54) **FÜHRUNGSTRÄGER FÜR TRIEBWERKSVERKLEIDUNGEN**
GUIDING CARRIER FOR JET ENGINE LININGS
SUPPORT DE GUIDAGE DESTINÉ AUX REVÊTEMENTS DE MOTEURS À RÉACTION

(30) Priorität: 23.06.2006 AT 10652006
(43) Veröffentlichungstag der Anmeldung: 11.03.2009
(73) Patentinhaber: FACC AG, 4910 Ried Im Innkreis (AT)
(72) Erfinder: ZEILLINGER, Roland, 3400 Klosterneuburg (AT); MAIER, Andreas, 3052 Innermanzing (AT); STEPHAN, Walter A., 4973 St. Martin (AT)
(74) Vertreter: Sonn & Partner Patentanwälte
(86) Internationale Anmeldenummer: PCT/AT2007/000308
(87) Internationale Veröffentlichungsnummer: WO 2007/147193

(56) Entgegenhaltungen:
- EP-A- 0 540 193
- EP-A- 1 457 659
- EP-A1- 0 080 404
- EP-A1- 0 586 000
- US-A- 4 722 821
- US-A- 5 083 426
- US-A- 5 863 014
- US-B2- 6 584 763

## Beschreibung

Die Erfindung betrifft einen Führungsträger für die Verkleidung von Strahltriebwerken für Flugzeuge, umfassend einen durch ein Hohlprofil mit im Wesentlichen geschlossenem Querschnitt gebildeten Grundkörper mit zumindest einer Gleiteinrichtung zur verschieblichen Lagerung einer Schubumkehreinrichtung, mit einer Anbindung für eine innere Triebwerksverkleidung, und mit Beschlägen zur lösbaren und schwenkbaren Befestigung an einer Tragkonstruktion oder zur Verbindung mit einem anderen Führungsträger.

Moderne Strahltriebwerke, wie sie hauptsächlich für den Antrieb von Flugzeugen eingesetzt werden, weisen einen so genannten Schubumkehrmechanismus auf. Die Schubumkehr ist zum Abbremsen des Flugzeugs am Boden durch Erzeugung von Schub entgegen der Bewegungsrichtung notwendig. Üblicherweise wird bei Strahltriebwerken durch geeignete Klappen (die so genannten "Blocker Doors") der Triebwerksstrahl nach vorne umgelenkt, wodurch dieser ein Bremsen des Flugzeugs bewirkt. Dadurch wird die Strecke, welche das Flugzeug zum Landen benötigt, verkürzt. Der Schubumkehrmechanismus enthält üblicherweise einen verschieblich gelagerten Teil der äußeren Triebwerksverkleidung, die so genannten "Translating Sleeve", an der die Umlenkklappen, welche schlussendlich zur Umlenkung des Luftstroms dienen, beweglich angeordnet sind. Die über die Umlenkklappen umgelenkte Luft wird durch einen Spalt in der Triebwerksverkleidung, welche sich zwischen dem nach hinten verschobenen Teil der äußeren Triebwerksverkleidung und der übrigen Triebwerksverkleidung ergibt, umgelenkt. Im normalen Betrieb des Triebwerks wird der Luftstrom durch einen zwischen einer äußeren und inneren Triebwerksverkleidung gebildeten Spalt gepresst, wodurch der Schub erzeugt wird.

Die wesentlichen Teile einer Triebwerksverkleidung umfassen eine innere Triebwerksverkleidung, welche um das Strahltriebwerk angeordnet ist und eine äußere Triebwerksverkleidung sowie den in Längsrichtung verschieblich angeordneten Teil der äußeren Triebwerksverkleidung, der den Schubumkehrmechanismus bildet. Der in Längsrichtung des Triebwerks verschiebliche Teil der äußeren Triebwerksverkleidung gleitet auf insgesamt vier Führungsträgern, welche mit der inneren Triebwerksverkleidung verbunden sind. Die innere Verkleidung der Triebwerke besteht aus zwei im Wesentlichen halbzylinderförmigen Wandteilen, welche das Triebwerk umschließen. Die Verkleidung des Triebwerks muss so stabil ausgebildet sein, dass im Fall der Explosion eines Triebwerks Teile nicht nach außen geschleudert werden, wo sie weitere Flugzeugteile beschädigen könnten. Die Wandteile der inneren Triebwerksverkleidung sind sowohl oben (in der 12-Uhr-Position) als auch unten (in der 6-Uhr-Position) mit jeweils einem Führungsträger verbunden. Die Führungsträger bestehen üblicherweise aus Metall, wie beispielsweise Aluminium- oder Titanlegierungen und werden mit der inneren Triebwerksverkleidung durch Nieten und bzw. oder Schrauben verbunden. Die oberen Führungsträger an der 12-Uhr-Position der Triebwerksverkleidung, die so genannten "hinge beams", sind verschwenkbar mit einer Tragkonstruktion, dem so genannten Pylon, über entsprechende Scharniere verbunden. Die Scharniere werden über entsprechende Beschläge an den oberen Führungsträgern verbunden. Die unteren Führungsträger an der 6-Uhr-Position der Triebwerksverkleidung, die so genannten "latch beams", werden über entsprechende Verbindungselemente miteinander fix verbunden. Zur Befestigung dieser Verbindungselemente befinden sich an den unteren Führungsträgern ebenfalls entsprechende Beschläge.

Bisherige Konstruktionen der Führungsträger sind relativ teuer in der Herstellung und weisen darüber hinaus relativ hohes Gewicht auf. Zur Reduktion des Gewichts werden die Wandteile der inneren Triebwerksverkleidung häufig aus Kunststoffverbundwerkstoff hergestellt. Im Bereich der Triebwerke treten enorm hohe Temperaturen auf, welchen insbesondere die Teile der inneren Triebwerksverkleidung ausgesetzt sind. Da Kunststoffverbundwerkstoff und Metalle sehr unterschiedliche Temperaturkoeffizienten aufweisen, kommt es bei Temperaturschwankungen zu unterschiedlichen Ausdehnungen der Wandteile aus Kunststoffverbundwerkstoff und der Führungsträger aus Metall. Dadurch treten insbesondere an der Verbindungsstelle zwischen den Teilen aus Kunststoffverbundwerkstoff und den Metallteilen besonders hohe Scherkräfte auf. Als Folge dessen müssen die Verbindungen zwischen Kunststoffteil und Metallteil entsprechend überdimensioniert werden und entsprechend viele Schrauben oder Nieten vorgesehen werden. Abgesehen vom höheren Aufwand und den höheren Kosten resultiert durch die höhere Anzahl von Verbindungselementen auch ein höheres Gewicht der Triebwerksverkleidung.

Die EP 586 000 B1 zeigt beispielsweise eine Schubumkehrvorrichtung, welche aus nicht-metallischem kohlenstofffaserverstärktem Verbundmaterial in Wabenstruktur mit höherer Wärmeleitfähigkeit hergestellt ist. Dadurch wird ein niedrigeres Gewicht der Schubumkehreinrichtung bei gleichzeitig guter Wärmeableitung erzielt. Über die Strukturen, an welchen die Schubumkehreinrichtung befestigt ist, enthält dieses Dokument jedoch keine Information.

Die EP 540 193 A1 beschreibt eine innere Triebwerksverkleidung der gegenständlichen Art, welche aus Verbundmaterial mit Kohlenstofffasern hergestellt ist, wobei die Wandteile der Triebwerksverkleidung zusammen mit den Flanschen einstückig hergestellt sind. Die Befestigung der Verkleidung an tragenden Strukturen wird nicht beschrieben.

Die US 5 083 426 A beschreibt eine innere Triebwerksverkleidung, bei der die Wandteile, welche das Triebwerk umgeben, ebenfalls einstückig aus Kunststoffverbundwerkstoff hergestellt sind.

Die US 6 584 763 B2 beschreibt eine Triebwerksverkleidung mit einem Schubumkehrmechanismus, wobei über die Beschaffenheit der Führungsträger und deren Verbindung mit der inneren Triebwerksverkleidung keine Information enthalten ist.

Die US 5 863 014 A zeigt ein Strahltriebwerk für Flugzeuge mit einem Schubumkehrmechanismus, wobei der Führungsträger in Form eines Hohlprofils aufgebaut ist.

Die EP 14 57 659 beschreibt einen Führungsträger mit den Merkmalen der Präambel des Anspruchs 1.

Es gab bereits Bestrebungen, zur Reduktion des Gewichts auch die Führungsträger der Triebwerksverkleidung aus faserverstärktem Kunststoffmaterial herzustellen. Aufgrund der hohen erforderlichen Steifigkeit dieser Bauteile war man jedoch gezwungen, besonders aufwändige Konstruktionen mit einer Vielzahl an Versteifungsstrukturen herzustellen, was mit einem besonders hohen Herstellungsaufwand, aber auch mit einem relativ hohen Gewicht verbunden war.

Die Aufgabe der vorliegenden Erfindung besteht daher in der Schaffung eines oben genannten Führungsträgers für eine Triebwerksverkleidung, welcher möglichst geringes Gewicht aufweist und die oben beschriebenen Nachteile in Bezug auf die Wärmeausdehnung reduziert. Der Führungsträger soll trotz niedrigem Gewicht möglichst steif sein und den hohen Belastungen standhalten. Weiters soll der Führungsträger möglichst einfach herstellbar sein und möglichst gute Langzeiteigenschaften aufweisen.

Gelöst wird die erfindungsgemäße Aufgabe dadurch, dass das Hohlprofil aus kohlenstofffaserverstärktem Kunststoffmaterial nach der Harz Infusions-Methode hergestellt ist. Durch den Aufbau des Grundkörpers des Führungsträgers in Form eines Hohlprofils mit im Wesentlichen geschlossenem Querschnitt wird die erforderliche Steifigkeit bei gleichzeitig dünnen Wandstärken und somit niedrigem Gewicht erzielt. Somit müssen, im Gegensatz zu Führungsträgern des Standes der Technik, welche aus Metall hergestellt sind und eine Reihe von Versteifungsrippen enthalten, keine aufwändigen Formen zur Herstellung verwendet werden, resultierend in einer einfacheren Herstellbarkeit und niedrigeren Herstellungskosten. Dadurch, dass auch der üblicherweise aus Metall hergestellte Führungsträger aus kohlenstofffaserverstärktem Kunststoffmaterial hergestellt wird, kann somit das Gewicht der Triebwerksverkleidung reduziert werden und auch das Problem der unterschiedlichen Wärmeausdehnung und somit der auftretenden Scherkräfte zwischen Führungsträger und innerer Triebwerksverkleidung weitestgehend reduziert werden. Durch ein Harz Infusions-Herstellungsverfahren ist die Bildung komplizierter dreidimensionaler Bauteile mit speziellen Eigenschaften möglich. Die Harz Infusions-Methode bringt gegenüber herkömmlichen Herstellungsmethoden unter Verwendung eines Autoklaven, in dem das Prepreg-Material ausgehärtet wird, Vorteile. Auch können die Teile gegenüber geschmiedeten und gefrästen Teilen aus Aluminium- und Titanlegierungen billiger hergestellt werden. Vorteilhafterweise wird der Führungsträger im Wesentlichen aus dem selben Material wie die innere Triebwerksverkleidung hergestellt. Dadurch weisen sowohl der Führungsträger als auch die innere Triebwerksverkleidung gleiche Wärmeausdehnung auf und es kommt zu keinen bzw. keinen wesentlichen Scherkräften an der Verbindung zwischen Führungsträger und innerer Triebwerksverkleidung. In der Folge können die Verbindungselemente reduziert und somit Gewicht eingespart werden. Das Hohlprofil kann Versteifungsstrukturen, insbesondere Versteifungsrippen, umfassen. Diese Versteifungsstrukturen geben dem Führungsträger eine höhere Steifigkeit bei gleichzeitig geringem Gewicht. Natürlich wird durch die Versteifungsstrukturen der Formenaufwand bei der Fertigung nach der Harz Infusions-Methode erhöht.

Vorteilhafterweise ist das Hohlprofil aus kohlenstofffaserverstärktem Kunststoffmaterial nach der Resin Transfer Moulding (RTM)-Methode hergestellt.

Teile des Hohlprofils können aus Carbongewebe vorgefertigt sein und bei der Herstellung des gesamten Hohlprofils aus kohlenstofffaserverstärktem Kunststoffmaterial nach der Harz Infusions-, insbesondere RTM-Methode eingebaut werden. Dadurch können komplexe Teile des Führungsträgers in einfacheren Formen vorgefertigt und dann bei der Herstellung nach dem Harz Infusions-Verfahren verwendet werden. Kohlenstofffasern haben hinsichtlich Gewicht und Festigkeitseigenschaften Vorteile.

Die Beschläge der Führungsträger können im Hohlprofil des Grundkörpers integriert und mit diesem einstückig hergestellt sein. Dies erhöht zwar den Formenaufwand bei der Herstellung des Hohlprofils des Grundkörpers, es werden jedoch Verbindungen zwischen den Beschlägen und dem Hohlprofil des Grundkörpers vermieden.

Alternativ dazu können die Beschläge auch aus kohlenstofffaserverstärktem Kunststoffmaterial nach der Harz Infusions-, insbesondere RTM-Methode hergestellt sein und anschließend mit dem fertigen Hohlprofil verbunden, insbesondere verklebt, werden. Durch diese Maßnahmen wird der Formenaufwand bei der Harz Infusions-Herstellung reduziert. Es wird aber eine Verklebung zwischen den Teilen erforderlich.

Schließlich können die Beschläge auch in herkömmlicher Weise aus Metall hergestellt werden und mit dem Hohlprofil verbunden, insbesondere verklebt, werden.

Wenn im Carbongewebe reaktive Materialien, wie z.B. Nylon, eingenäht oder eingewebt werden, können bestimmte Eigenschaften, wie Festigkeit oder Schlagzähigkeit, erhöht werden. Beispielsweise kann das verwendete Carbongewebe mit Nylon verwebt werden und nach Zugabe des Harzes das Nylonmaterial aufgelöst werden, wodurch die Schlagzähigkeit erhöht wird.

Zur optimalen Verbindung der Führungsträger mit der inneren Triebwerksverkleidung weist das Hohlprofil zumindest zwei Flansche zur Bildung der Anbindung für die innere Triebwerksverkleidung auf, wobei das Ende der inneren Triebwerksverkleidung zwischen den Flanschen einsteckbar ist. Durch die Flansche wird eine optimale Einleitung der Kräfte in die innere Triebwerksverkleidung erzielt, wodurch weniger Verbindungselemente zur Verbindung der inneren Triebwerksverkleidung mit dem Hohlprofil notwendig sind.

Gemäß einem weiteren Merkmal der Erfindung ist die innere Triebwerksverkleidung mit dem Hohlprofil verklebt. Durch die Verklebung fallen Verbindungselemente aus Metall weg bzw. kann deren Anzahl reduziert werden, was wiederum in einer Reduktion des Gesamtgewichts der Triebwerksverkleidung resultiert.

Alternativ oder zusätzlich dazu können die Flansche auch zumindest eine Bohrung zur Aufnahme eines Verbindungselements, beispielsweise eines Bolzens, einer Schraube oder dergl. aufweisen. Dabei wird angestrebt, möglichst wenige Verbindungselemente zu verwenden, so dass ein Wechsel der inneren Triebwerksverkleidung rascher durchgeführt werden kann. Die Verwendung von Verbindungselementen im Gegensatz zu einer Klebeverbindung hat natürlich auch den Vorteil, dass eine Wartung bzw. ein Ersatz der durch thermische Belastung schneller alternden inneren Triebwerksverkleidung leicht bzw. überhaupt möglich ist.

Im Falle einer Klebeverbindung können zusätzliche Deckschichten aus faserverstärktem Kunststoffmaterial mit der inneren Triebwerksverkleidung und dem Hohlprofil verklebt sein.

Das Hohlprofil weist vorzugsweise Nuten zur Bildung der Gleiteinrichtung zur verschieblichen Lagerung der Schubumkehreinrichtung auf. Diese Nuten können bei der Herstellung des Hohlprofils nach der Harz Infusions-Methode angefertigt werden oder auch in einem eigenen Arbeitsschritt aus Carbongewebe hergestellt und danach in den Herstellungsvorgang des Hohlprofils integriert werden.

Gemäß einem weiteren Merkmal der Erfindung weisen die Nuten kreissektorförmigen Querschnitt auf. In diesen kreissektorförmigen Nuten gleiten die an der Schubumkehreinrichtung bzw. dem in Längsrichtung des Triebwerks verschieblichen Teil der äußeren Triebwerksverkleidung angebrachten Gleitelemente in optimaler Weise.

Die Erfindung wird anhand der beigefügten Zeichnungen noch weiter erläutert. Darin zeigen:
Fig. 1a die Seitenansicht auf den hinteren Teil einer Verkleidung eines Strahltriebwerks;
Fig. 1b die Triebwerksverkleidung gemäß Fig. 1a in Draufsicht;
Fig. 1c die Triebwerksverkleidung gemäß Fig. 1a in der Ansicht von vorne;
die Fig. 2a bis 2c den Teil der Triebwerksverkleidung gemäß den Fig. 1a bis 1c, ohne den Teil der äußeren Triebwerksverkleidung, der den Schubumkehrmechanismus bildet;
Fig. 3 eine erfindungsgemäße Ausbildung eines oberen Führungsträgers;
Fig. 4 ein Schnittbild durch den oberen Führungsträger gemäß Fig. 3 entlang der Schnittlinie IV-IV;
Fig. 5 eine erfindungsgemäße Ausbildung eines unteren Führungsträgers; und
Fig. 6 ein Schnittbild durch den unteren Führungsträger gemäß Fig. 5 entlang der Schnittlinie VI-VI.

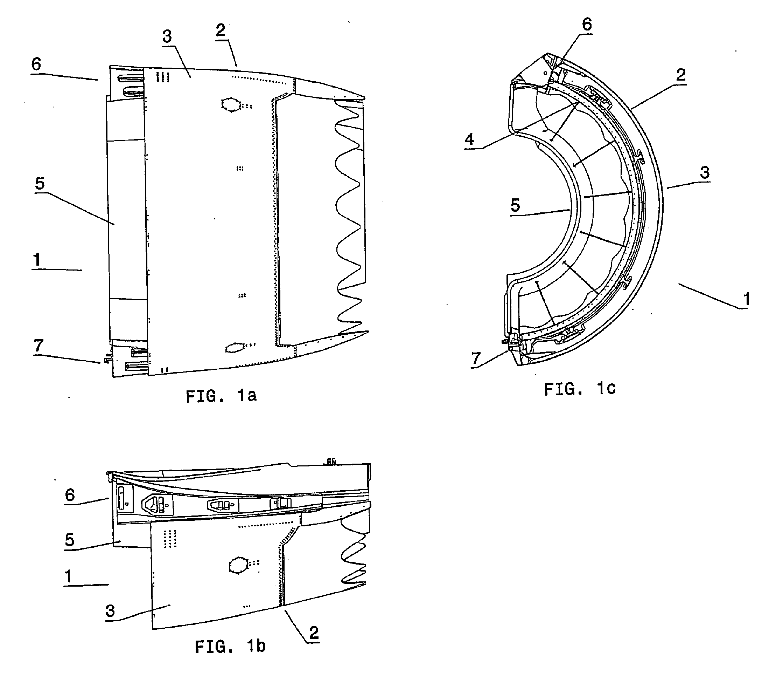

Die Fig. 1a bis 1c zeigen verschiedene Ansichten des hinteren Teils der Verkleidung 1 von Strahltriebwerken für Flugzeuge. Wie aus Fig. 1c ersichtlich, ist der besseren Übersicht halber nur eine Hälfte der Verkleidung 1 dargestellt. Die gesamte hintere Verkleidung 1 des Strahltriebwerks besteht aus zwei derartigen spiegelbildlich zueinander angeordneten Teilen der Verkleidung 1. Die Schubumkehreinrichtung 2 besteht im Wesentlichen aus einer äußeren Triebwerksverkleidung 3, der so genannten "translating sleeve", welche in Längsrichtung des Triebwerks verschieblich gelagert ist. An dem verschieblichen Teil der äußeren Triebwerksverkleidung 3 befinden sich die Umlenkklappen 4, welche den Luftstrom durch den Spalt zwischen äußerer Triebwerksverkleidung 3 und innerer Triebwerksverkleidung 5 blockieren, wenn die Schubumkehreinrichtung 2 aktiviert ist. Der verschiebliche Teil der äußeren Triebwerksverkleidung 3 gleitet auf entsprechenden Führungsträgern 6, 7, welche mit der inneren Triebwerksverkleidung 5 verbunden sind. Dabei sind Führungsträger 6 an der 12-Uhr-Position der Triebwerksverkleidung 1 und Führungsträger 7 an der 6-Uhr-Position der Triebwerksverkleidung 1 angeordnet.

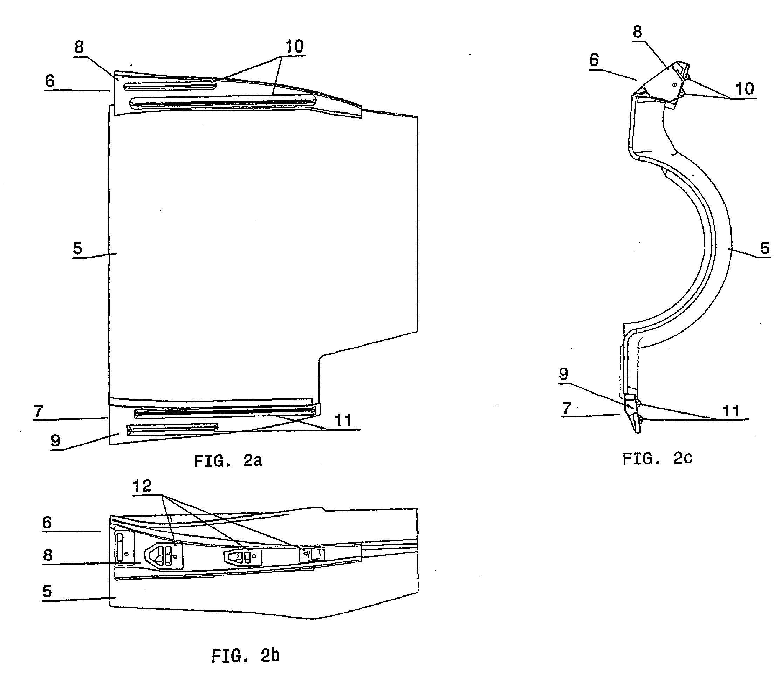

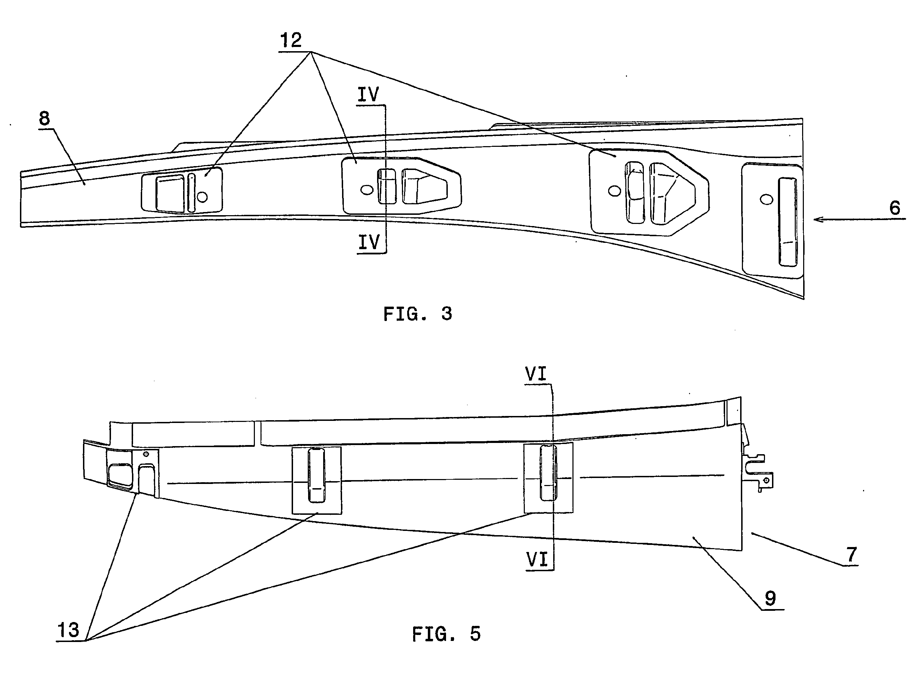

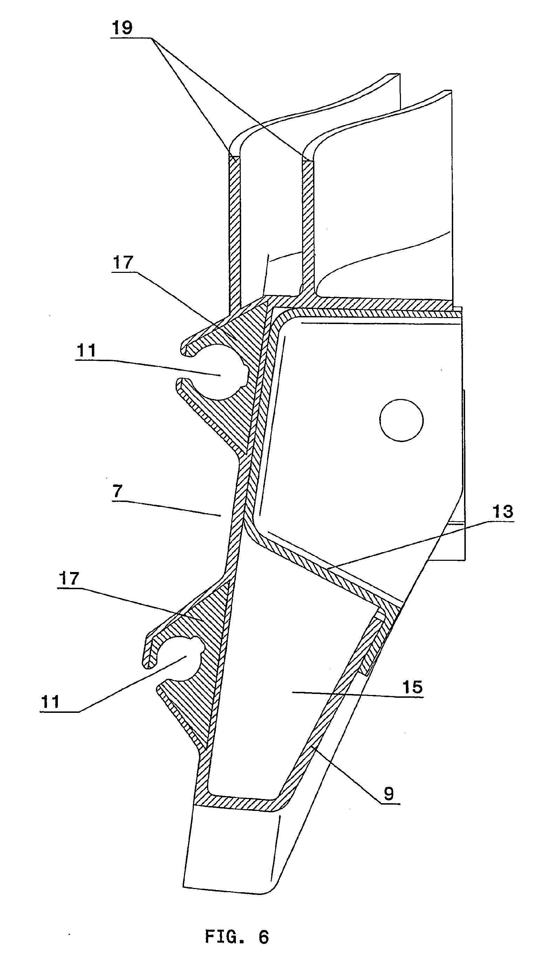

Wie besser aus den Fig. 2a bis 2c, bei welchen die äußere Triebwerksverkleidung 3 der Schubumkehreinrichtung 2 gegenüber den Fig. 1a bis 1c entfernt wurde, ersichtlich, bestehen die Führungsträger 6, 7 jeweils aus einem Grundkörper 8, 9 und jeweils zumindest einer Gleiteinrichtung 10, 11, auf welcher die Schubumkehreinrichtung 2 verschieblich gelagert ist. Die Gleiteinrichtungen 10, 11 bestehen aus einer Nut, beispielsweise mit kreissektorförmigem Querschnitt, in welcher ein entsprechend komplementär gestaltetes Element, welches an der Schubumkehreinrichtung befestigt ist, in Längsrichtung der Triebwerksverkleidung 1 verschiebbar gelagert werden kann (nicht dargestellt). Weiters enthalten die Führungsträger 6, 7 entsprechende Beschläge 12, 13 zur Befestigung an einer Tragkonstruktion oder zur Verbindung mit einem anderen Führungsträger 7. Zum Zwecke der Wartung des Triebwerks werden die oberen Führungsträger 6 über entsprechende Scharniere (nicht dargestellt), welche mit den Beschlägen 12 verbunden werden, an einer Tragkonstruktion, dem so genannten Pylon, lösbar und schwenkbar befestigt. Die unteren Führungsträger 7 hingegen werden durch Verbindung der Beschläge 13 (siehe Fig. 5 und 6) mit entsprechenden Verbindungselementen fixiert, so dass ein ungewolltes Öffnen der Triebwerksverkleidung 1 nicht auftreten kann.

Die erfindungsgemäßen Führungsträger 6, 7 sind im Detail in den Fig. 3 bis 6 dargestellt.

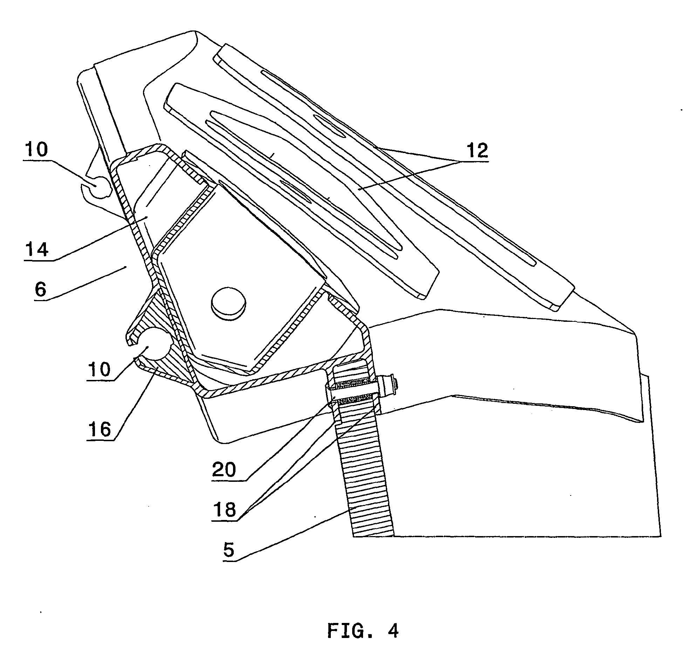

In Fig. 3 und dem Schnittbild gemäß Fig. 4 ist ein oberer Führungsträger 6 gezeigt, dessen Grundkörper 8 erfindungsgemäß durch ein Hohlprofil 14 mit im Wesentlichen geschlossenem Querschnitt gebildet ist.

Ebenso ist gemäß Fig. 5 und 6 der Grundkörper 9 des unteren Führungsträgers 7 durch ein Hohlprofil 15 mit im Wesentlichen geschlossenem Querschnitt gebildet.

Erfindungsgemäß wird das Hohlprofil 14, 15 der Grundkörper 8, 9 der Führungsträger 6, 7 aus kohlenstofffaserverstärktem Kunststoffmaterial nach der Harz Infusions-, insbesondere RTM-Methode hergestellt. Aufgrund der erfindungsgemäßen Gestaltung der Führungsträger 6, 7 durch ein Hohlprofil 14, 15 können die bei üblichen Führungsträgern aus Metall vorhandenen unzähligen Versteifungsrippen entfallen, weshalb der Formenaufwand für die Herstellung nach dem Harz Infusions-Verfahren relativ gering ist. Das Hohlprofil 14, 15 verleiht den Führungsträgern 6, 7 die erforderliche Steifigkeit. Teile des Hohlprofils 14, 15 können aus Carbongewebe vorgefertigt werden und in das Herstellungsverfahren des Hohlprofils 14, 15 eingebunden werden. Beispielsweise können die Teile 16, 17, welche die Gleiteinrichtungen 10, 11 bilden, aus Carbongewebe vorgefertigt werden und bei der Herstellung der Hohlprofile 14, 15 nach der Harz Infusions-Methode in die Form eingelegt werden. Die Beschläge 12, 13 können im Hohlprofil 14, 15 integriert sein und mit diesem einstückig hergestellt werden. Ebenso können die Beschläge 12, 13 aus kohlenstofffaserverstärktem Kunststoffmaterial nach der Harz Infusions-Methode hergestellt werden und nachträglich mit dem Hohlprofil 14, 15 verbunden, insbesondere verklebt, werden. Ebenso ist es möglich, dass die Beschläge 12, 13 aus Metall hergestellt werden und mit dem Hohlprofil 14, 15 verbunden, insbesondere verklebt, aber auch verschraubt oder vernietet, werden.

Zur optimalen Verbindung der Führungsträger 6, 7 mit der inneren Triebwerksverkleidung 5 weist das Hohlprofil 14 bzw. 15 jeweils zwei Flansche 18 bzw. 19 zur Bildung der Anbindung für die innere Triebwerksverkleidung 5 auf. In Fig. 4 ist die Anbindung der inneren Triebwerksverkleidung 5 am Hohlprofil 14 des oberen Führungsträgers 6 dargestellt. Durch diese Verbindung über die Flansche 18, 19 wird eine optimale Einleitung der Kräfte vom Führungsträger 6, 7 in die innere Triebwerksverkleidung 5 erzielt, weshalb die Befestigung mit nur wenigen Befestigungselementen erfolgen kann. Dabei kann die innere Triebwerksverkleidung 5 mit dem Hohlprofil 14, 15 verklebt werden oder über entsprechende Verbindungselemente 20, welche durch entsprechende Bohrungen in den Flanschen 18, 19 gesteckt werden, erfolgen. Dabei ist es von Vorteil, möglichst wenige Verbindungselemente 20 zu verwenden, um einen Tausch der inneren Triebwerksverkleidung 5 möglichst rasch durchführen zu können.

Durch den erfindungsgemäßen Führungsträger 6, 7 können Triebwerksverkleidungen 1 mit niedrigerem Gewicht, dennoch aber ausreichender Steifigkeit hergestellt werden.

## Patentansprüche

1. Führungsträger (6, 7) für die Verkleidung (1) von Strahltriebwerken für Flugzeuge, umfassend einen durch ein Hohlprofil (14, 15) mit im Wesentlichen geschlossenem Querschnitt gebildeten Grundkörper (8, 9) mit zumindest einer Gleiteinrichtung (10, 11) zur verschieblichen Lagerung einer Schubumkehreinrichtung (2), mit einer Anbindung für eine innere Triebwerksverkleidung (5), und mit Beschlägen (12, 13) zur lösbaren und schwenkbaren Befestigung an einer Tragkonstruktion oder zur Verbindung mit einem anderen Führungsträger (7), **dadurch gekennzeichnet, dass** das Hohlprofil (14, 15) aus kohlenstofffaserverstärktem Kunststoffmaterial nach der Harz Infusions-Methode hergestellt ist.

2. Führungsträger (6, 7) nach Anspruch 1, **dadurch gekennzeichnet, dass** das Hohlprofil (14, 15) aus kohlenstofffaserverstärktem Kunststoffmaterial nach der Resin Transfer Moulding (RTM)-Methode hergestellt ist.

3. Führungsträger (6, 7) nach Anspruch 1 oder 2, **dadurch gekennzeichnet, dass** Teile des Hohlprofils (14, 15) aus Carbongewebe vorgefertigt sind.

4. Führungsträger (6, 7) nach einem der Ansprüche 1 bis 3, **dadurch gekennzeichnet, dass** die Beschläge (12, 13) im Hohlprofil des Grundkörpers (8, 9) integriert und mit diesem einstückig hergestellt sind.

5. Führungsträger (6, 7) nach einem der Ansprüche 1 bis 3, **dadurch gekennzeichnet, dass** die Beschläge (12, 13) aus kohlenstofffaserverstärktem Kunststoffmaterial nach der Harz Infusions-Methode hergestellt sind und mit dem Hohlprofil (14, 15) verbunden, insbesondere verklebt, sind.

6. Führungsträger (6, 7) nach einem der Ansprüche 1 bis 3, **dadurch gekennzeichnet, dass** die Beschläge (12, 13) aus Metall hergestellt sind und mit dem Hohlprofil (14, 15) verbunden, insbesondere verklebt, sind.

7. Führungsträger (6, 7) nach einem der Ansprüche 3 bis 6, **dadurch gekennzeichnet, dass** im Carbongewebe reaktive Materialien, wie z.B. Nylon, eingenäht oder eingewebt sind.

8. Führungsträger (6, 7) nach einem der Ansprüche 1 bis 7, **dadurch gekennzeichnet, dass** das Hohlprofil (14, 15) zwei Flansche (18, 19) zur Bildung der Anbindung für die innere Triebwerksverkleidung (5) aufweist, wobei das Ende der inneren Triebwerksverkleidung (5) zwischen den Flanschen (18, 19) einsteckbar ist.

9. Führungsträger (6, 7) nach Anspruch 8, **dadurch gekennzeichnet, dass** die innere Triebwerksverkleidung (5) mit dem Hohlprofil (14, 15) verklebt ist.

10. Führungsträger (6, 7) nach Anspruch 8 oder 9, **dadurch gekennzeichnet, dass** die Flansche (18, 19) zumindest eine Bohrung zur Aufnahme eines Verbindungselements (20), beispielsweise eines Bolzens, einer Schraube oder dergl., aufweisen.

11. Führungsträger (6, 7) nach einem der Ansprüche 8 bis 10, **dadurch gekennzeichnet, dass** zusätzliche Deckschichten aus faserverstärktem Kunststoffmaterial mit der inneren Triebwerksverkleidung (5) und dem Hohlprofil (14, 15) verklebt sind.

12. Führungsträger (6, 7) nach einem der Ansprüche 1 bis 11, **dadurch gekennzeichnet, dass** das Hohlprofil (14, 15) Nuten zur Bildung der Gleiteinrichtung (10, 11) zur verschieblichen Lagerung der Schubumkehreinrichtung (2) aufweist.

13. Führungsträger (6, 7) nach Anspruch 12, **dadurch gekennzeichnet, dass** die Nuten aus Carbongewebe hergestellt und in den Herstellungsvorgang des Hohlprofils (14, 15) integriert sind.

14. Führungsträger (6, 7) nach Anspruch 12 oder 13, **dadurch gekennzeichnet, dass** die Nuten kreissektorförmigen Querschnitt aufweisen.

## Claims

1. A track beam (6, 7) for the cowling (1) of aircraft jet engines, comprising a base body (8, 9) formed by a hollow section (14, 15) of substantially closed cross-section and having at least one sliding means (10, 11) for displaceably mounting a thrust reverser (2), having a connection means for an inner engine cowling (5) and having fittings (12, 13) for a detachable and pivotable attachment to a supporting structure or for connection to another track beam (7), **characterized in that** said hollow section (14, 15) is made of a carbon-fiber-reinforced synthetic material by way of a resin-infusion method.

2. The track beam (6, 7) according to claim 1, **characterized in that** said hollow section (14, 15) is made of a carbon-fiber-reinforced synthetic material in a resin transfer molding (RTM) process.

3. The track beam (6, 7) according to claim 1 or 2, **characterized in that** said hollow section (14, 15) contains prefabricated carbon fabric parts.

4. The track beam (6, 7) according to any one of claims 1 to 3, **characterized in that** said fittings (12, 13) are integrated in said hollow section of said base body (8, 9) and integrally formed therewith.

5. The track beam (6, 7) according to any one of claims 1 to 3, **characterized in that** said fittings (12, 13) are formed of carbon-fiber-reinforced synthetic material in a resin infusion process and subsequently connected, in particular glued, to said hollow section (14, 15).

6. The track beam (6, 7) according to any one of claims 1 to 3, **characterized in that** said fittings (12, 13) are made of metal and connected with the hollow section (14, 15), in particular glued thereto.

7. The track beam (6, 7) according to any one of claims 3 to 6, **characterized in that** reactive materials, e.g. nylon, are sewed or woven into said carbon fabric.

8. The track beam (6, 7) according to any one of claims 1 to 7, **characterized in that** said hollow section (14, 15) includes two flanges (18, 19) for forming connection means for the inner engine cowling (5), wherein the end of the inner engine cowling (5) is insertible between said flanges (18, 19).

9. The track beam (6, 7) according to claim 8, **characterized in that** the inner engine cowling (5) is glued to said hollow section (14, 15).

10. The track beam (6, 7) according to claim 8 or 9, **characterized in that** said flanges (18, 19) are formed with at least one bore for receiving therein a connecting element (20), e.g. a bolt, screw or the like.

11. The track beam (6, 7) according to any one of claims 8 to 10, **characterized in that** additional cover layers of fiber-reinforced synthetic material are glued to the inner engine cowling (5) and to said hollow section (14, 15).

12. The track beam (6, 7) according to any one of claims 1 to 11, **characterized in that** said hollow section (14, 15) is formed with grooves forming said sliding means (10, 11) for displaceably mounting the thrust reverser (2).

13. The track beam (6, 7) according to claim 12, **characterized in that** said grooves are formed of carbon fabric and integrated in the production process of said hollow section (14, 15).

14. The track beam (6, 7) according to claim 12 or 13, **characterized in that** said grooves are formed with a sector-shaped cross-section.

## Revendications

1. Support de guidage (6, 7) pour le carénage de moteurs à réaction pour avions, comprenant un corps de base (8, 9) constitué par un profilé creux (14, 15) ayant une section transversale essentiellement fermée, comportant au moins un dispositif de coulissement (10, 11) permettant le montage coulissant d'un dispositif inverseur de poussée (2), comprenant une attache pour un carénage intérieur (5) du réacteur, et comprenant des ferrures (12, 13) pour la fixation démontable et pivotante sur une structure de support, ou pour une liaison à un autre support de guidage (7),
**caractérisé en ce que**
le profilé creux (14, 15) est réalisé en matière synthétique armée de fibres de carbone fabriquée selon le procédé d'infusion de résine.

2. Support de guidage (6, 7) selon la revendication 1,
**caractérisé en ce que**
le profilé creux (14, 15) est réalisé en matière synthétique armée de fibres de carbone fabriquée selon le procédé du Resin Transfer Moulding (RTM - moulage par transfert de résine).

3. Support de guidage (6, 7) selon la revendication 1 ou 2,
**caractérisé en ce que**
des parties du profilé creux (14, 15) sont préfabriquées en tissu de carbone.

4. Support de guidage (6, 7) selon l'une des revendications 1 à 3,
**caractérisé en ce que**
les ferrures (12, 13) sont intégrées au profilé creux du corps de base (8, 9), et sont faites d'un seul tenant avec celui-ci.

5. Support de guidage (6, 7) selon l'une des revendications 1 à 3,
**caractérisé en ce que**
les ferrures (12, 13) sont réalisées en matière synthétique armée de fibres de carbone fabriquée selon le procédé d'infusion de résine, et sont reliées, notamment collées, au profilé creux (14, 15).

6. Support de guidage (6, 7) selon l'une des revendications 1 à 3,
**caractérisé en ce que**
les ferrures (12, 13) sont réalisées en métal, et sont reliées, notamment collées, au profilé creux (14, 15).

7. Support de guidage (6, 7) selon l'une des revendications 3 à 6,
**caractérisé en ce que**
des matériaux réactifs tels que du Nylon, par exemple, sont tissés dans le tissu de carbone.

8. Support de guidage (6, 7) selon l'une des revendications 1 à 7,
**caractérisé en ce que**
le profilé creux (14, 15) comporte deux rebords (18, 19) destinés à constituer la liaison pour le carénage intérieur (5) du réacteur, l'extrémité du carénage intérieur (5) du réacteur pouvant être emboîtée entre les rebords (18, 19).

9. Support de guidage (6, 7) selon la revendication 8,
**caractérisé en ce que**
le carénage intérieur (5) du réacteur est assemblé collé avec le profilé creux (14, 15).

10. Support de guidage (6, 7) selon l'une des revendications 8 ou 9,
**caractérisé en ce que**
les rebords (18, 19) comportent au moins un perçage destiné à recevoir un élément de liaison (20), par exemple un axe, un boulon, ou similaire.

11. Support de guidage (6, 7) selon l'une des revendications 8 à 10,
**caractérisé en ce que**
des couches supplémentaires de couverture, faites en matière synthétique armée de fibres, sont assemblées collées avec le carénage intérieur (5) du réacteur et le profilé creux (14, 15).

12. Support de guidage (6, 7) selon l'une des revendications 1 à 11,
**caractérisé en ce que**
le profilé creux (14, 15) comporte des rainures conçues pour former le système de coulissement (10, 11) permettant le montage coulissant du dispositif d'inversion de poussée (2).

13. Support de guidage (6, 7) selon la revendication 12,
**caractérisé en ce que**
les rainures sont réalisées en tissu de carbone, et sont intégrées dans le processus de fabrication du profilé creux (14, 15).

14. Support de guidage (6, 7) selon la revendication 12 ou 13,
**caractérisé en ce que**
les rainures présentent une section transversale en forme de secteur de cercle.
